# EUROPÄISCHE PATENTANMELDUNG

(11) **EP 4 118 968 A1**
(43) Veröffentlichungstag der Anmeldung: **18.01.2023**
(21) Anmeldenummer: 22172466.9
(22) Anmeldetag: 10.05.2022
(51) Int. Cl.: A21C 9/08, A21C 15/00

(54) **MEHRREIHIGE ANLAGE ZUM BEFÜLLEN VON GEBÄCKSTÜCKEN MIT EINER FLIESSFÄHIGEN MASSE**

(30) Priorität: 21.05.2021 DE 102021205218
(71) Anmelder: WP Kemper GmbH, 33397 Rietberg (DE)
(72) Erfinder: Berkhan, Dietmar, 31535 Neustadt (DE); Engelmeier, Christian, 33397 Rietberg (DE); Robrecht, Daniel, 33129 Delbrück (DE)
(74) Vertreter: Rau, Schneck & Hübner Patentanwälte Rechtsanwälte PartGmbB

(57) **Zusammenfassung**

Eine mehrreihige Anlage (1) dient zum Befüllen von Gebäckstücken mit einer fließfähigen Masse. Einer Zustelleinrichtung (3) für unbefüllte Gebäckstücke (2) ist eine Vereinzelungseinrichtung (7) zum Vereinzeln der zugestellten Gebäckstücke (2) nachgeordnet. Die Vereinzelungseinrichtung (7) hat für jede Reihe der Gebäckstücke eine abfallende Rinne (10) sowie in einem Förderweg-Abschnitt nacheinander angeordnete Stoppeinheiten (11, 15), die jeweils zwischen einer Stoppstellung, in der das Gebäckstück (2) in einer jeweiligen Stoppposition (2₆, 2₇) gehalten wird, und einer Freigabestellung zur Weiterförderung der Gebäckstücke (2) verlagerbar sind. Zum Befüllen der vereinzelten Gebäckstücke (2) dient eine mehrreihige Befülleinrichtung (8). Zum Abführen der befüllten Gebäckstücke (2) von der Befülleinrichtung (8) dient eine Abführeinrichtung (4). Es resultiert eine Befüllanlage, die insbesondere hinsichtlich eines maximal erreichbaren Gebäckstück-Durchsatzes optimiert ist.

## Beschreibung

Die Erfindung betrifft eine mehrreihige Anlage zum Befüllen von Gebäckstücken mit einer fließfähigen Masse.

Eine Anlage zur Herstellung gefüllter Berliner ist vom Markt her als Anlage der Anmelderin unter der Produktbezeichnung "Evolution Donut & Berliner Line" bekannt. Die DE 196 08 070 A1 offenbart ein Verfahren und eine Vorrichtung zum Vereinzeln von in einem Massestrom transportierten Backwaren. Die DE 195 24 209 C2 offenbart eine Gebäckfüllvorrichtung.

Es ist eine Aufgabe der vorliegenden Erfindung, eine derartige Anlage insbesondere hinsichtlich eines maximal erreichbaren Gebäckstück-Durchsatzes zu optimieren.

Diese Aufgabe ist erfindungsgemäß gelöst durch eine Anlage mit den im Anspruch 1 angegebenen Merkmalen und durch eine Anlage mit den im Anspruch 12 angegebenen Merkmalen.

Erfindungsgemäß wurde erkannt, dass eine mehrreihige Anlage mit zwei hintereinander angeordneten Stoppeinheiten für die Gebäckstücke in den Reihen-Förderbahnen als Teil einer Vereinzelungseinrichtung die Möglichkeit zu einem sicheren kontinuierlichen und insbesondere taktweisen Betrieb der Anlage bietet. Die Anlage kann mindestens acht Reihen, mindestens zehn Reihen und beispielsweise 15 Reihen des mehrreihigen Gebäckstück-Förderweges aufweisen. Zu befüllende Gebäckstücke können Quarkbällchen oder Berliner sein. Auch andere Gebäckstückformen können befüllt werden. Als zu befüllende fließfähige Masse kann eine Fruchtmasse, zum Beispiel Erdbeerfülle, Gelee, Konfitüre, Marmelade oder flüssige Schokolade zum Einsatz kommen. Bei den zu befüllenden Produkten kann es sich um frittierte Gebäckstücke handeln, die insbesondere nach einem Kühl-Zwischenschritt befüllt werden.

Eine Verlagerbarkeit der Stoppeinheiten der Vereinzelungseinrichtung zwischen den Stellungen kann durch Translation und/oder durch Verschwenken erfolgen. Beispielsweise die erste Stoppeinheit kann linear zwischen der Stoppstellung und der Freigabestellung verlagerbar sein und die zweite Stoppeinheit kann zwischen der Stoppstellung und der Freigabestellung verschwenkbar sein. In einer anderen Variante kann die erste Stoppeinheit zwischen der Stoppstellung und der Freigabestellung verschwenkbar sein und die zweite Stoppeinheit kann linear zwischen der Stoppstellung und der Freigabestellung verlagerbar sein. Auch können beide Stoppeinheiten linear zwischen der Stoppstellung und der Freigabestellung verlagerbar sein oder es können beide Stoppeinheiten zwischen der Stoppstellung und der Freigabestellung verschwenkbar sein. Die jeweilige Stoppeinheit kann Haltezinken zum Anhalten der zugestellten Gebäckstücke in der jeweiligen Stoppposition aufweisen. Pro Reihen-Förderbahn, also pro anzuhaltendem Gebäckstück können genau zwei Haltezinken vorgesehen sein. Dies gewährleistet eine definierte Stoppposition und vermeidet, dass das jeweils gehaltene Gebäckstück unerwünscht an der Stoppeinheit anhaftet.

Ein typischer Durchmesser der zu befüllenden Gebäckstücke kann im Bereich zwischen 35 mm und 65 mm liegen.Ein typischer Gebäckstück-Durchsatz kann im Bereich zwischen 1.000 und 20.000 Stück pro Stunde liegen, insbesondere zwischen 10.000 und 15.000 Stück pro Stunde. Bei taktweisem Betrieb der Anlage kann eine Taktrate im Bereich zwischen 5 und 20 Takten pro Minute, insbesondere zwischen 10 und 15 Takten pro Minute liegen.

Führungsleisten nach Anspruch 2 gewährleisten eine sichere Vorgabe der Reihen-Förderbahnen des mehrreihigen Förderwegs. Vor den Reihen-Förderbahnen kann eine ungeordnete Menge von Gebäckstücken über die Zustelleinrichtung zugestellt werden. Auf diese Weise kann zwischen beispielsweise einer Kühlvorrichtung der Anlage und einer die Befülleinrichtung aufweisenden Veredelungsvorrichtung der Anlage im Bereich der Zustelleinrichtung ein Gebäckstück-Puffer erzeugt werden, was einen möglichen Taktbetrieb der Befüllanlage vereinfacht.

Ein Sensor nach Anspruch 3 kann überwachen, dass in allen Reihen des mehrreihigen Förderwegs Gebäckstücke in der ersten Stoppposition vorliegen, sodass dann eine Komplettbefüllung aller Reihen in der zweiten Stoppposition möglich wird. Sollte die sensorische Überwachung ergeben, dass erste Stopppositionen freibleiben, kann der Sensor insbesondere eine Fehlermeldung weitergeben.

Ein Sensor nach Anspruch 4 kann insbesondere in Verbindung mit dem Sensor nach Anspruch 3 sicherstellen, dass die Anlage korrekt funktioniert, dass also eine Übergabe von Gebäckstücken von der Vereinzelungseinrichtung in die Befülleinrichtung tatsächlich in allen freigegebenen Reihen der Anlage erfolgt. Sollte die sensorische Überwachung ergeben, dass zweite Stopppositionen freibleiben, kann der Sensor insbesondere eine Fehlermeldung weitergeben. Alternativ oder zusätzlich kann eine Meldung an die Befülleinrichtung erfolgen, sodass nur in den Reihen eine Befüllung stattfindet, in denen auch tatsächlich Gebäckstücke aus der zweiten Stoppposition übergeben werden. Hierdurch kann vermieden werden, dass unerwünscht ein Befüllschritt ohne Befüllen des Gebäckstücks durchgeführt wird.

Ein Begrenzungselement nach Anspruch 5 stellt sicher, dass Gebäckstücke in den Reihen-Förderbahnen nicht unerwünscht nach oben ausweichen. Das Begrenzungselement kann als Leitblech gestaltet sein.

Eine Herstellung der Rinne der Vereinzelungseinrichtung als 3D-Druckteil nach Anspruch 6 hat sich in der Praxis bewährt. Die Rinne kann mehrteilig oder auch einstückig für alle Reihen-Förderbahnen ausgeführt sein und für jede dieser Reihen-Förderbahnen einen Rinnenabschnitt aufweisen. Es hat sich herausgestellt, dass die Genauigkeit des 3D-Drucks zu Vorgabe der jeweiligen Reihen-Förderbahn ausreichend ist, wobei zudem die Oberflächenqualität, die beim 3D-Druck entsteht, haftungsmindernd und zudem für die gegebenenfalls vorhandene Sensorik wenig störend ist. Die Rinne kann aus Kunststoff gefertigt sein. Als 3D-Druckverfahren kann ein SLS (Selective Laser Sintering, selektives Lasersintern) -Verfahren zum Einsatz kommen.

Eine Befülleinrichtung nach Anspruch 7 führt zu einem sicheren Befüllen der Gebäckstücke mit der fließfähigen Masse. Die Impfspritzen-Einheit steht mit einem Vorrat der fließfähigen Masse in Fließverbindung. Die Impfleiste der Befülleinrichtung kann wechselbar gestaltet sein. Dies ermöglicht einen Austausch der Impfleiste zur Reinigung ohne längere Standzeit der Anlage. Zudem können Impfleisten für verschiedene Größen der zu befüllenden Gebäckstücke gestaltet sein. Die Impfleiste kann aus Kunststoff gefertigt sein. Die Impfleiste kann einen Metallträger zur Stabilisierung aufweisen.

Eine Antriebseinheit nach Anspruch 8 ermöglicht einen sicheren Wechsel der Befülleinrichtung zwischen der Ausgangsstellung und der Impfstellung. Verlagerbar kann die Impfleiste und/oder die Impfspritzen-Einheit sein. Die Antriebseinheit kann durch einen Getriebemotor mit montiertem Hebel und Pleuelstange realisiert sein.

Eine Ausführung nach Anspruch 9 hat sich in der Praxis bewährt, insbesondere im Zusammenhang mit einer translativ verlagerbaren Impfleiste.

Ein Leitabschnitt nach Anspruch 10 gewährleistet eine positionssichere Landung der Gebäckstücke in die jeweilige Impfkammer.

Eine Abführeinheit nach Anspruch 11 stellt ein sicheres Abführen der Gebäckstücke nach dem Befüllen sicher. Die Abführeinheit kann wiederum eine Zinkengestaltung ähnlich der Stoppeinheiten aufweisen. Eine Verlagerbarkeit der Abführeinheit kann wiederum über einen Linearantrieb erfolgen.

Die Vorteile einer mehrreihigen Anlage mit einer mehrreihigen Befülleinrichtung einschließlich einer mehrreihigen Impfleiste und einer mehrreihigen Impfspritzen-Einheit entsprechen denen, die vorstehend im Zusammenhang mit dem Anspruch 7 bereits erläutert wurden. Die entsprechende Anlage nach Anspruch 12 kann weitere Komponenten und Funktionen aufweisen, die vorstehend bereits insbesondere im Zusammenhang mit der Befülleinrichtung nach den Ansprüchen 7 bis 11 bereits erläutert wurde.

Ein Ausführungsbeispiel der Erfindung wird nachfolgend anhand der Zeichnung näher erläutert. Es zeigen:
- Fig. 1: Einen gebrochenen Ausschnitt aus einem längs einer Förderrichtung geschnittenen vertikalen Längsschnitt durch eine mehrreihige Anlage zum Befüllen von Gebäckstücken mit einer fließfähigen Masse, wobei Gebäckstücke in beispielhaften Momentanstellungen im Zuge eines Befüllvorgangs längs einer Reihen-Förderbahn des mehrreihigen Förderwegs dargestellt sind;
- Fig. 2: In einer zu Fig. 1 ähnlichen Darstellung eine Momentansituation einer Zustelleinrichtung und einer Vereinzelungseinrichtung der Befüllanlage beim Zustellen der Gebäckstücke hin zur Vereinzelungseinrichtung;
- Fig. 3: Die Komponenten der Befüllanlage nach Fig. 2 in einer Momentansituation beim Vereinzeln der Gebäckstücke, wobei ein längs der Reihen-Förderbahn führendes Gebäckstück in einer Stoppposition gehalten wird;
- Fig. 4: In einer zu Fig. 3 ähnlichen Darstellung die Momentansituation, bei der das längs der Reihen-Förderbahn führende Gebäckstück in einer zweiten Stoppposition durch die Vereinzelungseinrichtung gehalten ist;
- Fig.5: Eine Impfleisten-Anordnung einer Befülleinrichtung sowie eine Abführeinrichtung der Befüllanlage in einer zu Fig. 1 ähnlichen Darstellung, wobei das dargestellte Gebäckstück einerseits in einer Momentansituation im freien Fall zwischen der Vereinzelungseinrichtung und der Befülleinrichtung und andererseits nach dem freien Fall zum Befüllen angeordnet in einer Impfposition in einer Impfkammer der Befülleinrichtung dargestellt ist;
- Fig. 6: In einer zu Fig. 5 ähnlichen Darstellung die Impfleisten-Anordnung der Befülleinrichtung in einer Momentansituation, in der sie in Richtung einer in dieser Figur nicht dargestellten Impfspritzeneinheit der Befülleinrichtung linear verlagert ist;
- Fig. 7: In einer zu Fig. 1 ähnlichen Darstellung die Befüllanlage beim Befüllen des in der Impfkammer angeordneten Gebäckstücks mit der Impfspritzen-Einheit in der Impfstellung, in der die Impfspritzen in die Impfkammern zum Befüllen des jeweiligen Gebäckstücks eindringen; und
- Fig. 8: In einer zu Fig. 5 ähnlichen Darstellung die ImpfleistenAnordnung mit einer bodenseitigen Abführeinheit in einer Freigabestellung, in der eine Förderverbindung zwischen den Impfkammern und der Abführeinrichtung freigegeben ist, wobei das führende, befüllte Gebäckstück auf einem AbführFörderband der Abführeinrichtung dargestellt ist.

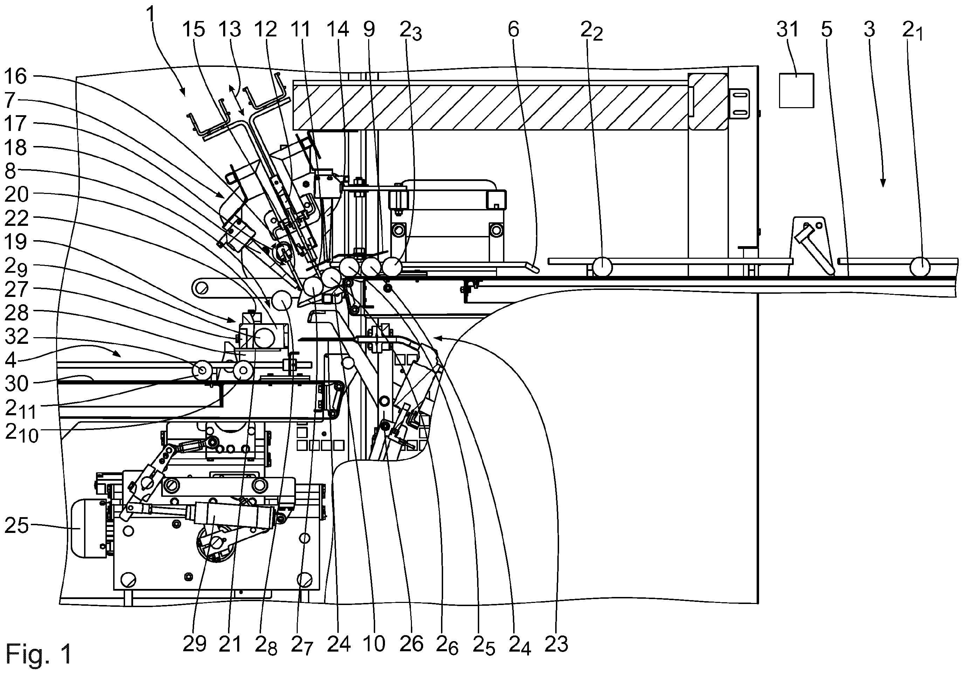

Figur 1 zeigt in einer gebrochenen Ansicht Hauptkomponenten einer mehrreihigen Anlage 1 zum Befüllen von Gebäckstücken 2 mit einer fließfähigen Masse. Bei den Gebäckstücken kann es sich beispielsweise um Quarkbällchen handeln. Bei der fließfähigen Masse kann es sich beispielsweise um Erdbeerfülle, Gelee, Konfitüre, Marmelade oder um flüssige Schokolade handeln.

Die Befüllanlage 1 arbeitet im Taktbetrieb.

Dargestellt ist in der Figur 1 ein vertikaler Längsschnitt längs einer Reihen-Förderbahn für die Gebäckstücke 2 eines insgesamt mehrreihigen Förderweges der Befüllanlage 1. Senkrecht zur Zeichenebene der Figur 1 liegen mehrere dieser Reihen-Förderbahnen hintereinander angeordnet vor. Die Befüllanlage 1 hat insgesamt 15 solcher Reihen-Förderbahnen, ist also 15-reihig. Je nach Ausgestaltung der Befüllanlage 1 kann die Anzahl der Reihen beispielsweise zwischen vier und 20 liegen. Die Reihen-Förderbahnen verlaufen parallel zueinander.

Die in der Figur 1 gezeigte Reihen-Förderbahn wird durch den Förderweg von beispielhaft in Momentanstellungen 2ᵢ gezeigten Gebäckstücken 2 verdeutlicht, wobei der Index i längs des Förderwegs von einer Zustelleinrichtung 3 bis hin zu einer Abführeinrichtung 4 beginnend von 1 hochgezählt ist. Bei den Gebäckstücken 2, die in den Momentanstellungen 2ᵢ dargestellt sind, kann es sich um tatsächlich verschiedene Gebäckstücke oder aber um das gleiche Gebäckstück in verschiedener Stellung handeln.

Die Zustelleinrichtung 3 dient zur Bereitstellung der noch unbefüllten Gebäckstücke 2 längs Reihen-Förderbahnen eines mehrreihigen Förderweges in der Befüllanlage 1. Die Gebäckstücke (vgl. die Momentanstellungen der Gebäckstücke 2₁ und 2₂ in der Figur 1) werden zunächst auf einem Förderband 5 in noch ungeordneter Art und Weise zugestellt. Die Zustelleinrichtung 3 hat nachfolgend im Förderweg eine Mehrzahl von Führungsleisten 6, die senkrecht zur Zeichenebene der Figur 1 parallel zueinander angeordnet sind und stromaufwärtige Abschnitte der Reihen-Förderbahnen für die unbefüllten Gebäckstücke vorgeben. Der Abstand zwischen zwei benachbarten Führungsleisten 6 ist also etwas größer als der Durchmesser der zu befüllenden Gebäckstücke 2.

Der Zustelleinrichtung 3 im Förderweg nachgeordnet ist eine entsprechend mehrreihige Vereinzelungseinrichtung 7 der Befüllanlage 1. Die Vereinzelungseinrichtung 7 dient zum Vereinzeln der zugestellten Gebäckstücke 2, damit taktweise jeweils genau ein Gebäckstück 2 von der Vereinzelungseinrichtung 7 an eine nachgeordnete, entsprechend mehrreihige Befülleinrichtung 8 zum Befüllen der vereinzelten Gebäckstücke 2 weitergegeben ist.

Stromaufwärts führend hat die Vereinzelungseinrichtung 7 im Förderweg der Reihen-Förderbahnen ein als Leitblech ausgeführtes Begrenzungselement 9 zum Begrenzen der Reihen-Förderbahnen im Bereich von Stopppositionen der Gebäckstücke 2 nach oben. Dieses Begrenzungselement 9 hat eine die Reihen-Förderbahnen nach oben begrenzende Wirkung für die Momentanstellungen der Gebäckstücke 2₃ bis 2₇ in der Darstellung der Figur 1. Das Begrenzungselement 9 verhindert, dass die Gebäckstücke 2 in diesem Abschnitt der Reihen-Förderbahnen unerwünscht nach oben ausweichen.

Die Vereinzelungseinrichtung 7 hat eine abfallende, entsprechend mehrreihige Rinne 10 zur Vorgabe eines Förderweg-Abschnitts der Gebäckstücke 2 in der Vereinzelungseinrichtung 7. Die Momentanstellungen der Gebäckstücke 2₆ und 2₇ zeigen diese geführt durch die Rinne 10 im jeweiligen Reihen-Förderbahnabschnitt. Bei der mehrreihigen Rinne, die senkrecht zur Zeichenebene der Figur 1 als Rinnenleiste ausgeführt ist, kann es sich um ein 3D-Druckteil handeln.

Die Vereinzelungseinrichtung 7 hat eine im Förderweg-Abschnitt vorgeordnete erste Stoppeinheit 11. Letztere dient zum Anhalten der zugestellten Gebäckstücke (vgl. Momentanstellung des Gebäckstücks 2₆) in einer ersten Stoppposition. Die erste Stoppeinheit 10 hat eine Mehrzahl von Zinken, wobei jedem Gebäckstück 2 in der ersten Stoppposition zwei Zinken zugeordnet sind, die das Gebäckstück in der Momentanstellung 2₆ an einem definierten Ort 2₆ der jeweiligen Reihen-Förderbahn halten. Für den mehrreihigen Förderweg ist die erste Stoppeinheit 11 also als Zinkenreihe mit insgesamt 30 Zinken für die 15 Reihen des Förderwegs ausgeführt.

Die erste Stoppeinheit 11 ist über einen Linearantrieb 12 verlagerbar (vgl. Doppelpfeil 13) zwischen einer in der Figur 1 dargestellten Stoppstellung, in der die erste Stoppeinheit 11 das Gebäckstück 2 in der ersten Stoppposition 2₆ hält, und einer Freigabestellung, in der die Zinken der ersten Stoppeinheit 11 in Richtung des Doppelpfeils 13 aus dem mehrreihigen Förderweg verlagert sind und in der die erste Stoppeinheit 11 das jeweilige Gebäckstück 2 in der Reihen-Förderbahn zur Weiterförderung in der Vereinzelungseinrichtung 7 freigibt.

Für jede Reihen-Förderbahn hat die Vereinzelungseinrichtung 7 einen Sensor 14 zur Erfassung, ob ein Gebäckstück2 in der ersten Stoppposition 2₆ vorliegt. Der Sensor 14 ist als optischer Sensor ausgeführt, beispielsweise als Entfernungsmessgerät oder als Lichtschranke.

Die Vereinzelungseinrichtung 7 hat nach der ersten Stoppeinheit 11 eine im Förderweg-Abschnitt nachgeordnete zweite Stoppeinheit 15, die wiederum 30 Zinken aufweist, die entsprechend der ersten Stoppeinheit 11 paarweise den Reihen-Förderbahnen des mehrreihigen Förderwegs zugeordnet sind. Die zweite Stoppeinheit 15 dient zum Anhalten der zugestellten Gebäckstücke in einer der ersten Stoppposition 2₆ nachgelagerten zweiten Stoppposition 2₇.

Die zweite Stoppeinheit 15 ist über einen Schwenkantrieb 16 verlagerbar zwischen einer in der Figur 1 dargestellten Stoppstellung, in der die zweite Stoppeinheit 15 das Gebäckstück 2 in der zweiten Stoppposition 2₇ hält, und einer ausgeschwenkten Freigabestellung, in der die zweite Stoppeinheit 15 das Gebäckstück 2 zur Weiterförderung hin zur Befülleinrichtung 8 freigibt.

Die Schwenkbarkeit der zweiten Stoppeinheit 15 ist in der Figur 1 durch einen Doppelpfeil 17 angedeutet. Für jede der Reihen-Förderbahnen hat die Vereinzelungseinrichtung 7 einen weiteren Sensor 18 zur Erfassung, ob ein Gebäckstück 2 in der zweiten Stoppposition 2₇ vorliegt. Auch dieser weitere Sensor 18 ist als optischer Sensor ausgebildet.

Die Befülleinrichtung 8 hat eine Impfleiste 19 mit jeweils einer Impfkammer 20 für jede Reihe der Gebäckstücke 2. Figur 1 zeigt das Gebäckstück 2 einerseits in einer Momentanstellung 2₈ im freien Fall von der Rinne 10 hin zur Impfleiste 19 und andererseits in einer Impfstellung 2₉ in der Impfkammer 20. In dieser Impfstellung liegt das Gebäckstück 2₉ auf einer bodenseitigen Abführeinheit 21 der Impfkammer 20 auf, die wiederum als Zinkenleiste mit insgesamt 30 Zinken, paarweise für die 15 Reihen des Förderweges, ausgeführt ist.

Die Impfleiste 19 hat einen stromaufwärts der jeweiligen Impfkammer 20 angeordneten Leitabschnitt 22 für das im freien Fall einfallende Gebäckstück 2₈. Der Leitabschnitt 22 ist konisch angeschrägt und halbrund gestaltet und stellt sicher, dass bei einer unvermeidbaren Flugbahnvariation des Gebäckstücks 2₈ dieses sicher in der Impfkammer 20 der jeweiligen Reihen-Förderbahn zu liegen kommt.

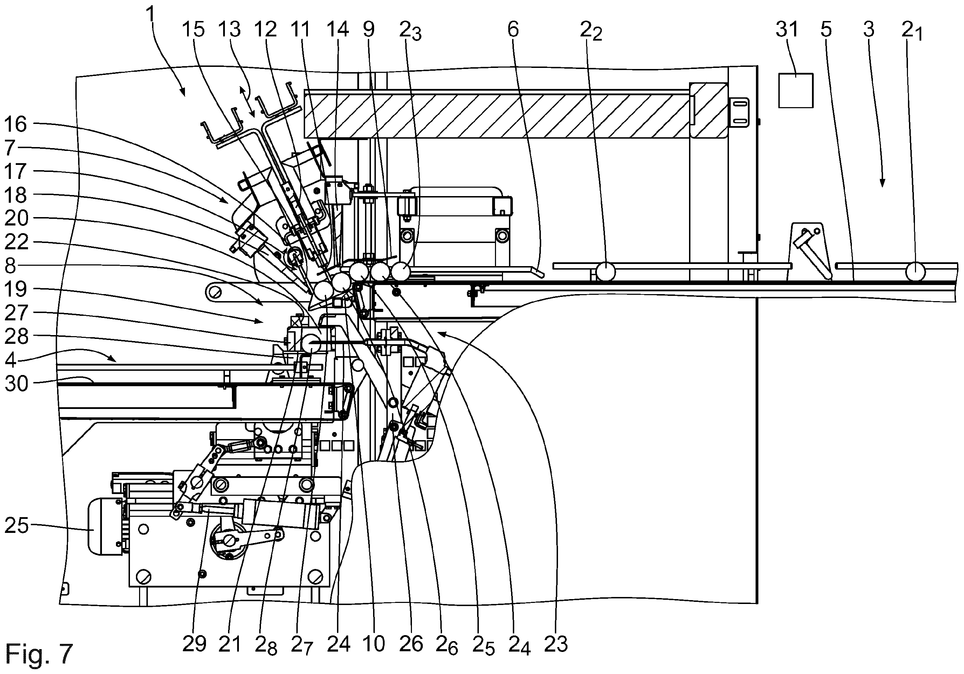

Die Befülleinrichtung 8 hat weiterhin eine entsprechend mehrreihige Impfspritzen-Einheit 23 mit Impfspritzen 24 zum Befüllen für jede Impfkammer 20. Die Impfkammern 20 sind relativ zu den Impfspritzen 24 der Impfspritzen-Einheit 23 mithilfe eines Linearantriebs 25 verlagerbar zwischen einer in der Figur 1 dargestellten Ausgangsstellung und einer Impfstellung. In der Ausgangsstellung liegen die Impfspritzen 24 der Impfspritzen-Einheit 23 außerhalb der Impfkammern 20. In der Impfstellung (vgl. Figur 7) dringen die Impfspritzen 24 in die Impfkammern 20 zum Befüllen des jeweiligen Gebäckstücks 2, der in der Impfkammer 20 vorliegt, ein. Hierzu haben die Impfkammern 20 entsprechende Ausnehmungen, durch die die Impfspritzen 24 eindringen können. Die lineare Verlagerung der Impfkammern 20 relativ zur Impfspritzen-Einheit 23 erfolgt durch lineare Translation der Impfleiste 19 relativ zur Impfspritzen-Einheit 23, die rahmenfest zu einem Rahmen 26 der Befüllanlage 1 angeordnet ist.

Die Impfleiste 19 kann als wechselbare Einheit ausgestaltet sein. Die Wechselbarkeit dient insbesondere zu regelmäßigen Reinigungszwecken der Impfleiste 19, die dann gegen eine gereinigte Impfleiste getauscht werden kann. Auch ein Wechsel zwischen verschiedenen Impfkammer-Größen ist durch diese Wechselbarkeit der Impfleisten 19 möglich.

Die Impfleiste 19 ist, soweit die Impfkammern 20 seitlich begrenzt werden, aus Kunststoff gefertigt, insbesondere aus POM (Polyoxymethylen). Auch der Leitabschnitt 22 kann aus einem entsprechenden Kunststoffmaterial gefertigt sein. Zur Stabilisierung kann die Impfleiste 19 einen Metallträger 27 aufweisen, der fest mit einem Förderschlitten 28 der Befülleinrichtung 8 verbunden ist. Bei der Linearverlagerung durch den Linearantrieb 25 wird der Förderschlitten 28 relativ zum Rahmen 26 der Befüllanlage 1 verlagert.

Die bodenseitig der Impfkammern 20 angeordnete Abführeinheit 21 ist in der Figur 1 in einer Kammerstellung dargestellt, in der die Abführeinheit 23 die Impfkammern 20 begrenzt. Die Abführeinheit kann, angetrieben durch einen weiteren Linearantrieb 29 in eine Freigabestellung (vgl. Figur 7) verlagert werden, in der eine Förderverbindung zwischen den Impfkammern 20 und einem Förderband 30 für die befüllten Gebäckstücke 2 (Momentanstellungen 2₁₀, 2₁₁) freigegeben ist.

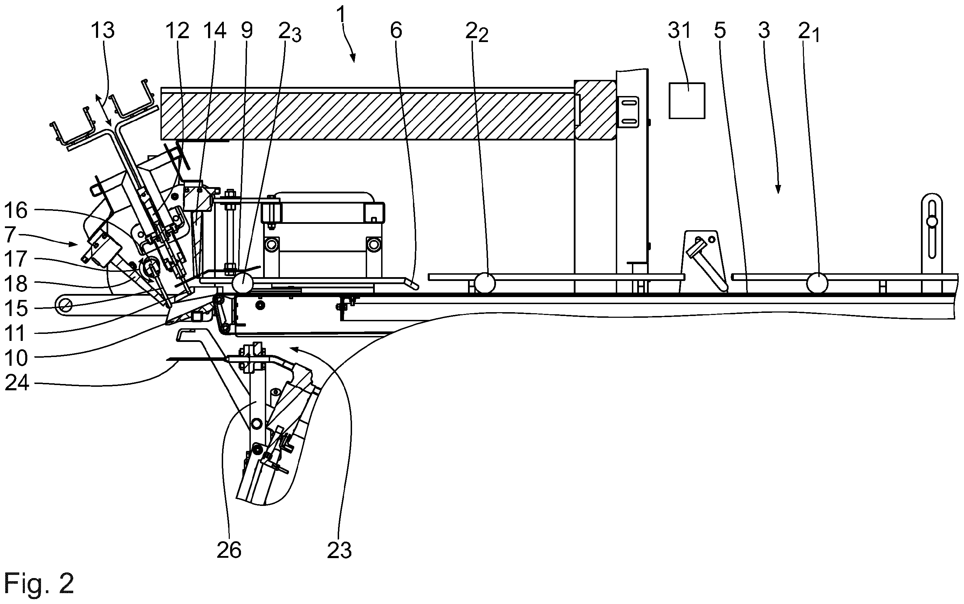

Anhand der Figuren 2 bis 7 wird das Befüllverfahren erläutert, das mit der Befüllanlage 1 durchgeführt werden kann:
Figur 2 zeigt die Bereitstellung der Gebäckstücke 2 längs der Reihen-Förderbahnen durch die Zustelleinrichtung 3 mittels der Führungsleisten 6. Ein in der Figur 2 führendes Gebäckstück 2 tritt gerade in den Förderbahnabschnitt ein, in der eine Begrenzung nach oben durch das Begrenzungselement 9 stattfindet. Die beiden Stoppeinheiten 11, 15 sind jeweils in der Stoppstellung. Die Befülleinrichtung ist in der Ausgangsstellung.

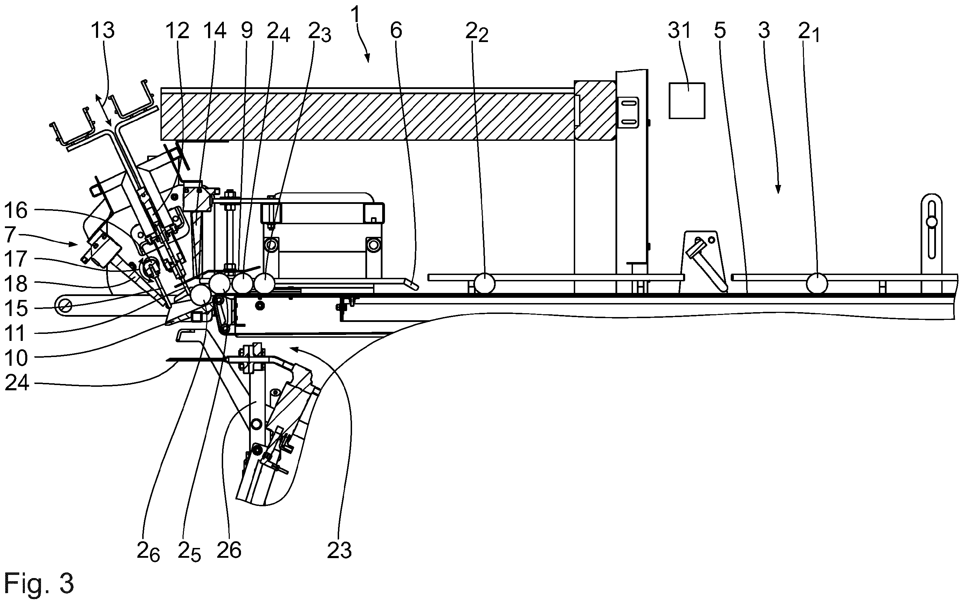

Figur 3 zeigt die Situation, bei der das führende Gebäckstück 2 in der ersten Stoppposition 2₆ vorliegt. Beide Stoppeinheiten 11 und 15 sind noch in der Stoppstellung.

Überwacht durch den Sensor 14 wird sichergestellt, dass die erste Stoppeinheit 11 erst dann in die Freigabestellung überführt wird, wenn tatsächlich in dieser oder auch in allen vorgegebenen Reihen des mehrreihigen Förderwegs Gebäckstücke 2 in der Momentanstellung 2₆ (erste Stoppposition) nach Figur 1 vorliegen. Eine Freigabe einer Reihe über die jeweilige erste Stoppeinheit 11 kann also unabhängig von der Freigabe der anderen Reihen geschehen. Gesteuert über eine zentrale Steuereinrichtung 31 (vgl. Figur 1) kann eine geringere Anzahl als die maximal mögliche Reihenanzahl definiert werden, die beim aktuellen Befüllvorgang zum Einsatz kommen kann. Beispielsweise kann die Befüllanlage 1 so gesteuert sein, dass von den fünfzehn betreibbaren Reihen beispielsweise zehn Reihen betrieben werden. Die nicht betriebenen Förderbahnen werden dann im Bereich eines Einlaufs in die Führungsleisten 6 blockiert und der Sensor 14 erfasst dann ausschließlich eine Befüllung der nicht blockierten Reihen-Förderbahnen, also, ob Gebäckstücke in der Momentanstellung 2₆ in den nicht blockierten Reihen-Förderbahnen vorliegen.

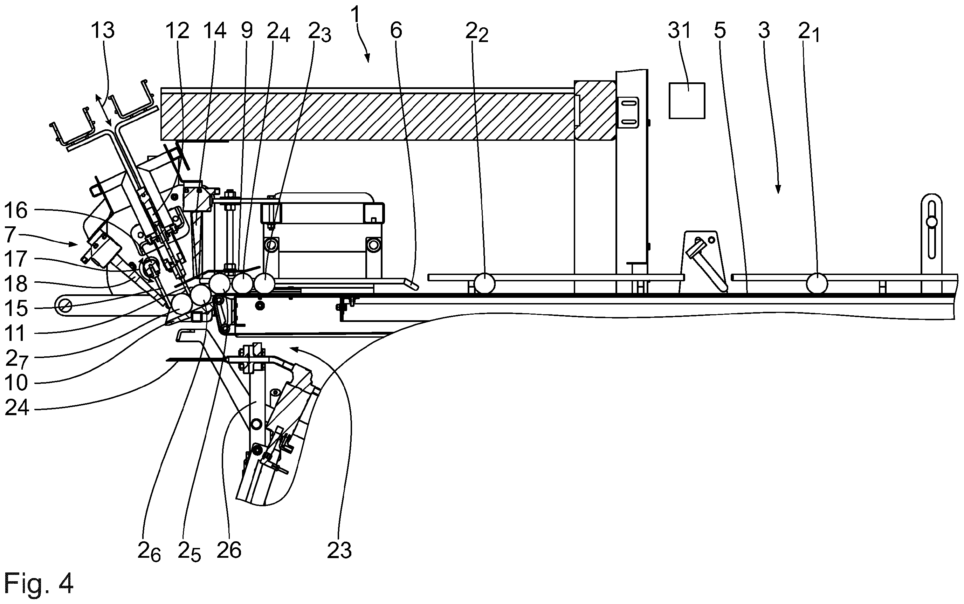

Figur 4 zeigt die Situation, nachdem die erste Stoppeinheit 11 zwischenzeitlich in der Freigabestellung war, sodass das führende Gebäckstück von der Momentanstellung 2₆ in die Momentanstellung 2₇ (zweite Stoppposition) überführt wurde. Anschließend wurde die erste Stoppeinheit 11 wiederum in die Stoppstellung zurückverlagert, sodass die Momentansituation nach Figur 4 vorliegt, in der wiederum beide Stoppeinheiten 11, 15 in der Stoppstellung vorliegen. Der jeweilige zweite Sensor 18 kann überwachen, ob die Reihen tatsächlich mit Gebäckstücken in der Momentanstellung 2₇ vorliegen und gegebenenfalls eine Fehlermeldung weitergeben. Mit dem zweiten Sensor 18 kann auch sichergestellt werden, dass nur in den Reihen eine Befüllung stattfindet, in denen tatsächlich Gebäckstücke in der Momentanstellung 2₇ vorliegen, bei der die Gebäckstücke also an den Zinken der zweiten Stoppeinheit 15 in deren Stoppstellung anliegen. Hierdurch kann vermieden werden, dass unerwünscht ein Befüllschritt ohne Befüllen eines Gebäckstücks durchgeführt wird. Nach der Überwachung durch den Sensor 18 wird im nächsten Takt die zweite Stoppeinheit 15 in die Freigabestellung überführt, sodass alle Gebäckstücke, die in der zweiten Stoppposition 2₇ in den jeweiligen Reihen vorlagen, nun im freien Fall hin zur Befülleinrichtung 8 fallen. Die nachfolgenden Gebäckstücke werden von der ersten Stoppeinheit in der ersten Stoppposition 2₆ zurückgehalten.

Die beiden Stoppeinheiten 11, 15 bilden eine Schleuse der Befüllanlage 1, sodass sichergestellt wird, dass taktweise genau eine der Anzahl der freigegebenen und durch Gebäckstücke belegten Reihen entsprechende Gebäckstück-Anzahl in die Impfkammern der Befülleinrichtung überführt wird. Zudem kann sichergestellt werden, dass pro Reihe genau ein Gebäckstück übergeben wird.

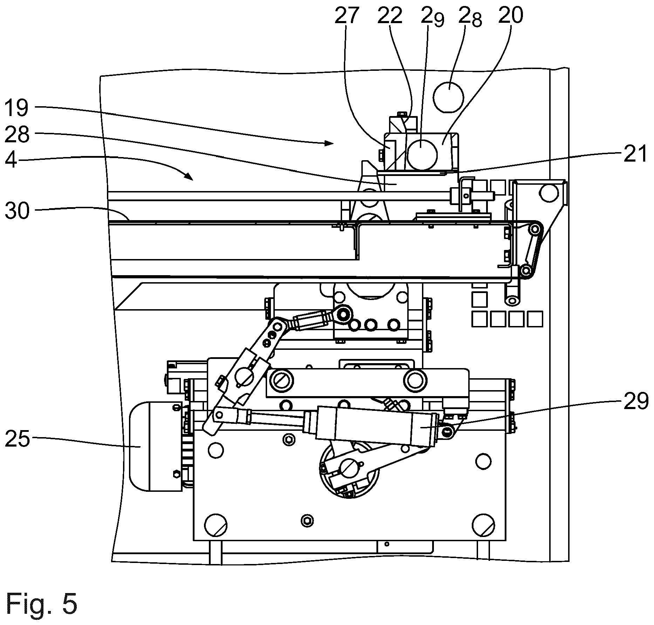

Figur 5 zeigt den freien Fall der Gebäckstücke in die Impfkammer 20 bis hin zu einer definierten Impfposition, bei der das jeweilige Gebäckstück der Impfkammer 20 auf der Abführeinheit 21 in der Kammerstellung aufliegt.

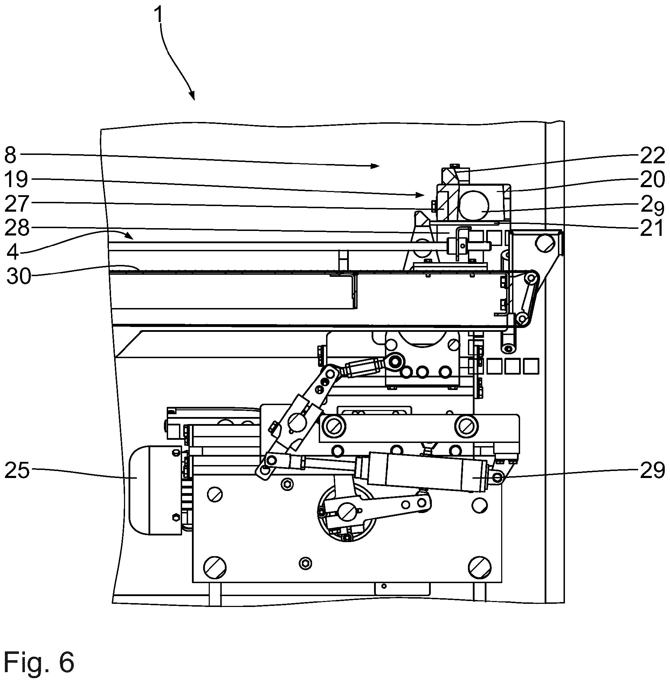

Figur 6 zeigt die Momentansituation nach Zustellung der Impfleiste 19 mit den befüllten Impfkammern 20 in die Impfstellung. Im Vergleich zur Figur 5 ist die Impfleiste 19 nun relativ zum Rahmen 26 der Befüllanlage 1 nach rechts verlagert. Dies geschieht durch Betätigung des Antriebs 25.

Figur 7 zeigt das Befüllen der Gebäckstücke 2 in den Impfkammern 20 über die Impfspritzen 24 der Impfspritzen-Einheit 23, die in der Impfstellung in die Impfkammern 20 eindringen.

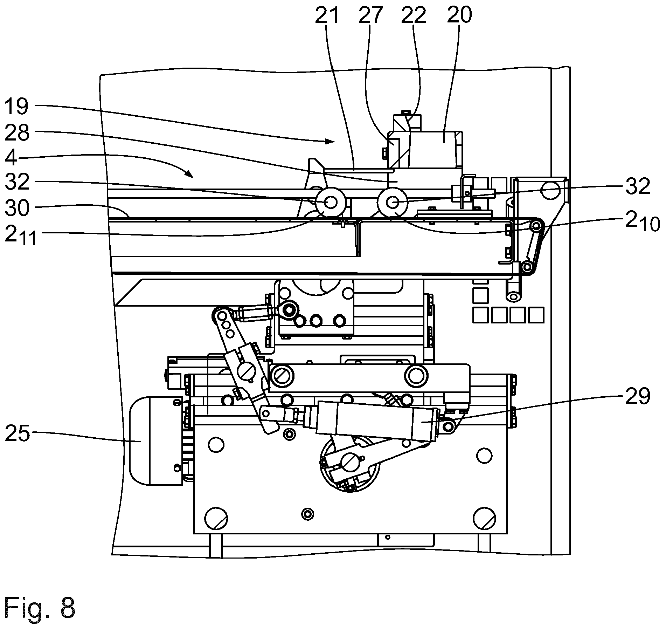

Figur 8 zeigt die befüllten Gebäckstücke (Momentanstellungen 2₁₀, 2₁₁) nach Freigabe aus den Impfkammern 20. Die Abführeinheit 21 ist in der Freigabestellung.

Ein Füllkern 32 aus der in das jeweilige Gebäckstück gefüllten fließfähigen Masse ist in den Figuren 1 und 8 in den Gebäckstücken 2 angedeutet.

## Patentansprüche

1. Mehrreihige Anlage (1) zum Befüllen von Gebäckstücken mit einer fließfähigen Masse,
- mit einer Zustelleinrichtung (3) zur Bereitstellung unbefüllter Gebäckstücke (2) längs Reihen-Förderbahnen eines mehrreihigen Förderweges,
- mit einer der Zustelleinrichtung (3) nachgeordneten mehrreihigen Vereinzelungseinrichtung (7) zum Vereinzeln der zugestellten Gebäckstücke (2),
- mit einer mehrreihigen Befülleinrichtung (8) zum Befüllen der vereinzelten Gebäckstücke (2),
- mit einer Abführeinrichtung (4) zum Abführen der befüllten Gebäckstücke (2) von der Befülleinrichtung (8),
- wobei die Vereinzelungseinrichtung (7) für jede Reihe der Gebäckstücke (2) aufweist:
-- Eine abfallende Rinne (10) zur Vorgabe eines Förderweg-Abschnitts der Gebäckstücke (2) in der Vereinzelungseinrichtung (7),
-- eine im Förderweg-Abschnitt vorgeordnete erste Stoppeinheit (11) zum Anhalten der zugestellten Gebäckstücke (2) in einer ersten Stoppposition (2₆), wobei die erste Stoppeinheit (11) angetrieben verlagerbar ist zwischen
--- einer Stoppstellung, in der die erste Stoppeinheit (11) das Gebäckstück (2) in der ersten Stoppposition (2₆) hält, und
--- einer Freigabestellung, in der die ersten Stoppeinheit (11) das Gebäckstück (2) zur Weiterförderung in der Vereinzelungseinrichtung (7) freigibt,
-- eine im Förderweg-Abschnitt nachgeordnete zweite Stoppeinheit (15) zum Anhalten der zugestellten Gebäckstücke (2) in einer der ersten Stoppposition (2₆) nachgelagerten zweiten Stoppposition (2₇), wobei die zweite Stoppeinheit (15) angetrieben verlagerbar ist zwischen
--- einer Stoppstellung, in der die zweite Stoppeinheit (15) das Gebäckstück (2) in der zweiten Stoppposition (2₇) hält, und
--- einer Freigabestellung, in der die zweite Stoppeinheit (15) das Gebäckstück (2) zur Weiterförderung zur Befülleinrichtung (8) freigibt.

2. Anlage nach Anspruch 1, **dadurch gekennzeichnet, dass** die Zustelleinrichtung (3) eine Mehrzahl von Führungsleisten (6) zur Vorgabe der Reihen-Förderbahnen für die unbefüllten Gebäckstücke (2) aufweist.

3. Anlage nach Anspruch 1 oder 2, **dadurch gekennzeichnet, dass** die Vereinzelungseinrichtung (7) für jede Reihen-Förderbahn einen Sensor (14) zur Erfassung aufweist, ob ein Gebäckstück (2) in der ersten Stoppposition (2₆) vorliegt.

4. Anlage nach einem der Ansprüche 1 bis 3, **dadurch gekennzeichnet, dass** die Vereinzelungseinrichtung (7) für jede Reihen-Förderbahn einen Sensor (18) zur Erfassung aufweist, ob ein Gebäckstück in der zweiten Stoppposition (2₇) vorliegt.

5. Anlage nach einem der Ansprüche 1 bis 4, **dadurch gekennzeichnet, dass** die Vereinzelungseinrichtung (7) ein Begrenzungselement (9) zum Begrenzen der Reihen-Förderbahnen im Bereich der Stopppositionen (2₆, 2₇) nach oben aufweist.

6. Anlage nach einem der Ansprüche 1 bis 5, **dadurch gekennzeichnet, dass** die Rinne (10) als 3D-Druckteil hergestellt ist.

7. Anlage nach einem der Ansprüche 1 bis 6, **dadurch gekennzeichnet, dass** die Befülleinrichtung (8) aufweist:
- eine Impfleiste (19) mit jeweils einer Impfkammer (20) für jede Reihe der Gebäckstücke (2) und
- eine Impfspritzen-Einheit (23) mit Impfspritzen (24) zum Befüllen der Gebäckstücke (2) in jeder Impfkammer (20),
- wobei die Impfleiste (19) relativ zur Impfspritzen-Einheit (23) verlagerbar ist zwischen
-- einer Ausgangsstellung, in der die Impfspritzen (24) der Impfspritzen-Einheit (23) außerhalb der Impfkammern liegen, und
-- einer Impfstellung, in der die Impfspritzen (24) in die Impfkammern (20) zu der Impfleiste (19) zum Befüllen des jeweiligen Gebäckstücks (2) eindringen.

8. Anlage nach Anspruch 7, **gekennzeichnet durch** eine Antriebseinheit (25) zur linearen Translation der Impfleiste (19) relativ zur Impfspritzen-Einheit (23).

9. Anlage nach Anspruch 7 oder 8, **gekennzeichnet durch** eine Ausführung derart, dass das jeweilige, unbefüllte Gebäckstück (2) nach Freigabe durch die zweite Stoppeinheit (15) im freien Fall in die zugeordnete Impfkammer (20) des Förderwegs längs der jeweiligen Reihen-Förderbahn fällt.

10. Anlage nach Anspruch 9, **dadurch gekennzeichnet, dass** die Impfleiste (19) einen stromaufwärts der jeweiligen Impfkammer (20) angeordneten Leitabschnitt (22) für das einfallende Gebäckstück (2) aufweist.

11. Anlage nach einem der Ansprüche 7 bis 10, **dadurch gekennzeichnet, dass** die Impfkammern (20) der Impfleiste (19) bodenseitig eine Abführeinheit (21) aufweist, die angetrieben verlagerbar ist zwischen
- einer Kammerstellung, in der die Abführeinheit (21) die Impfkammern (20) bodenseitig begrenzt, und
- einer Freigabestellung, in der eine Förderverbindung zwischen den Impfkammern (20) und der Abführeinrichtung (4) freigegeben ist.

12. Mehrreihige Anlage (1) zum Befüllen von Backwerk mit einer fließfähigen Masse,
- mit einer Zustelleinrichtung (3) zur Bereitstellung unbefüllter Gebäckstücke (2) längs Reihen-Förderbahnen eines mehrreihigen Förderweges,
- mit einer der Zustelleinrichtung (3) nachgeordneten mehrreihigen Vereinzelungseinrichtung (7) zum Vereinzeln der zugestellten Gebäckstücke (2),
- mit einer mehrreihigen Befülleinrichtung (8) zum Befüllen der vereinzelten Gebäckstücke (2),
- mit einer Abführeinrichtung (4) zum Abführen der befüllten Gebäckstücke (2) von der Befülleinrichtung (8),
wobei die mehrreihige Befülleinrichtung (8) aufweist:
- eine Impfleiste (19) mit jeweils einer Impfkammer (20) für jede Reihe der Gebäckstücke (2) und
- eine Impfspritzen-Einheit (23) mit Impfspritzen (24) zum Befüllen der Gebäckstücke (2) in jeder Impfkammer (20),
- wobei die Impfleiste (19) relativ zur Impfspritzen-Einheit (23) verlagerbar ist zwischen
-- einer Ausgangsstellung, in der die Impfspritzen (24) der Impfspritzen-Einheit (23) außerhalb der Impfkammern liegen, und
-- einer Impfstellung, in der die Impfspritzen (24) in die Impfkammern (20) zu der Impfleiste (19) zum Befüllen des jeweiligen Gebäckstücks (2) eindringen.
